# EUROPÄISCHE PATENTSCHRIFT

(11) **EP 2 757 321 B1**
(45) Veröffentlichungstag und Bekanntmachung des Hinweises auf die Patenterteilung: **24.06.2020**
(21) Anmeldenummer: 13382021.7
(22) Anmeldetag: 21.01.2013
(51) Int. Cl.: F24C 15/10, C03C 17/00, C03C 17/04

(54) **KOCHFELD**
COOKING HOB
PLAQUE DE CUISSON

(43) Veröffentlichungstag der Anmeldung: 23.07.2014
(73) Patentinhaber: BSH Hausgeräte GmbH, 81739 München (DE)
(72) Erfinder: Alaman Aguilar, Jorge, Zaragoza (ES); Buñuel Magdalena, Miguel Angel, Zaragoza (ES); Escartín Barduzal, Andrés, Zaragoza (ES); Ester Sola, Francisco Javier, Zaragoza (ES); Garro Ceballos, Blanca, Zaragoza (ES); Martín Gómez, Dámaso, Zaragoza (ES); Martínez Solanas, Elena, Zaragoza (ES); Pérez Cabeza, Pilar, Zaragoza (ES); Planas Layunta, Fernando, Zaragoza (ES); Puig Valls, Oriol, Tarrega (Lerida) (ES); Urrutia Angos, David, Zaragoza (ES)

(56) Entgegenhaltungen:
- EP-A1- 1 264 806
- EP-A1- 1 867 613
- WO-A1-99/33760
- WO-A1-2011/020719
- WO-A1-2011/085996
- WO-A1-2012/028986
- WO-A1-2012/080945
- DE-A1-102007 030 503
- DE-A1-102010 045 149
- DE-U1- 20 319 629

## Beschreibung

Die Erfindung geht aus von einem Kochfeld mit einer Kochfeldplattenvorrichtung nach dem Oberbegriff des Anspruchs 1.

Es ist bekannt, Kochfeldplatten an ihrer Oberseite oder an ihrer Unterseite zu beschichten. Dokument DE 10 2007 030503 A1 beschreibt ein Kochfeld mit einer an einer Unterseite des Kochfelds angebrachten Beschichtung. Dokument DE 203 19 629 U1 hingegen beschreibt ein Kochfeld mit einer an seiner Oberseite angebrachten Beschichtung.

Die Aufgabe der Erfindung besteht insbesondere darin, eine gattungsgemäße Vorrichtung mit verbesserten Eigenschaften hinsichtlich einer hohen gestalterischen Freiheit, eines hohen Komforts, einer hohen Haltbarkeit und/oder einer einfachen Pflege bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Kochfeld mit einer Kochfeldplattenvorrichtung, insbesondere einer Induktionskochfeldplattenvorrichtung, mit zumindest einer Kochfeldplatteneinheit und zumindest einer Beschichtungsstruktur, die zumindest auf einer Oberseite der Kochfeldplatteneinheit angeordnet ist.

Es wird vorgeschlagen, dass die Beschichtungsstruktur in zumindest einem ersten Teilbereich der Oberseite eine höhere Dicke aufweist als in einem zweiten Teilbereich der Oberseite. Insbesondere beträgt die Dicke im ersten Teilbereich zumindest 120 %, insbesondere zumindest 150 %, vorteilhaft zumindest 200 %, besonders vorteilhaft zumindest 250 %, einer, insbesondere mittleren, Dicke im zweiten Teilbereich.

Vorzugsweise weist die Beschichtungsstruktur in den Teilbereichen Dicken größer als Null auf. Vorzugsweise existiert zu jedem der Teilbereiche zumindest ein Kreis, der komplett in dem Teilbereich liegt und der einen Durchmesser größer als 1 mm, insbesondere größer als 3 mm, vorzugsweise größer als 10 mm, aufweist. Unter einer "Kochfeldplatteneinheit" soll insbesondere eine Platteneinheit verstanden werden, die zu einem Aufstellen von Gargeschirr zu einer Erwärmung und/oder Erhitzung durch zumindest ein Heizelement, insbesondere Induktionsheizelement, das insbesondere unter der Platteneinheit angeordnet ist, vorgesehen ist, wobei Energie von dem Heizelement zu dem Gargeschirr vorzugsweise durch die Platteneinheit hindurch, insbesondere in Form elektromagnetischer Strahlung, übertragen wird. Unter einer "Platteneinheit" soll insbesondere eine Einheit verstanden werden, die eine Dicke aufweist, die maximal 10 %, insbesondere maximal 5 %, vorteilhaft maximal 2 %, vorzugsweise maximal 1 %, einer Breite und/oder Länge der Platteneinheit entspricht. Insbesondere weist die Platteneinheit einen Hauptkörper auf, der zumindest 30 %, insbesondere zumindest 60 %, vorteilhaft zumindest 90 %, eines kleinsten gedachten Quaders, der die Platteneinheit komplett umfasst, ausfüllt. Unter einer "Dicke" der Platteneinheit soll insbesondere eine Länge einer kürzesten Seite des kleinsten gedachten Quaders verstanden werden, der die Platteneinheit komplett umfasst. Unter einer "Länge" und/oder "Breite" der Platteneinheit sollen insbesondere Längen von Seiten, die von der kürzesten Seite verschieden sind, verstanden werden. Insbesondere ist die Kochfeldplatteneinheit zumindest im Wesentlichen von einem zumindest glasartigen Material, insbesondere Glaskeramik und/oder Borosilikatglas, alternativ von einem Verbundmaterial, insbesondere in Silikatmatrix eingebettete Fasern, insbesondere Steinfasern, gebildet. Insbesondere ist die Kochfeldplatteneinheit zumindest teilweise, insbesondere zumindest im Wesentlichen, von zumindest einem zumindest im Wesentlichen transparenten Material gebildet. Insbesondere weist die Platteneinheit zumindest eine, zumindest im Wesentlichen ebene, Seitenfläche auf, die vorzugsweise eine Oberseite bildet. Unter einer "Oberseite" der Kochfeldplatteneinheit soll insbesondere eine Außenseite der Kochfeldplatteneinheit verstanden werden, die in zumindest einem Betriebszustand einem zu erhitzenden Gargeschirr zugewandt ist. Insbesondere macht die Oberseite zumindest 30 %, insbesondere zumindest 40 %, vorteilhaft zumindest 45 %, einer gesamten Oberfläche der Kochfeldplatteneinheit aus. Unter einer "Beschichtungsstruktur" soll insbesondere eine Gesamtheit von, insbesondere zumindest teilweise übereinander aufgetragenen, Beschichtungen, insbesondere Beschichtungen unterschiedlichen Materials und/oder unterschiedlicher Funktion, verstanden werden. Insbesondere besteht die Beschichtungsstruktur zumindest im Bereich der Oberseite aus einer einzelnen Beschichtung. Unter einer "Dicke" der Beschichtungsstruktur soll insbesondere eine senkrechte Entfernung eines Punkts der Beschichtungsstruktur zu der Kochfeldplatteneinheit verstanden werden. Insbesondere weist die Beschichtungsstruktur zumindest in den Teilbereichen Dicken von zumindest 10 µm, insbesondere zumindest 20 µm, vorteilhaft zumindest 50 µm, vorzugsweise zumindest 100 µm, und/oder von maximal 2 mm, insbesondere maximal 1 mm, vorteilhaft maximal 0,5 mm, auf. Unter "vorgesehen" soll insbesondere speziell ausgeformt, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere weist die Beschichtungsstruktur zumindest in den zwei Teilbereichen eine zumindest im Wesentlichen gleiche Grundfärbung auf, die insbesondere dazu vorgesehen ist, ein keramisches Erscheinungsbild zu erzeugen. Insbesondere weist die Beschichtungsstruktur zumindest im ersten Teilbereich, insbesondere in allen Teilbereichen eine farbliche Strukturierung, insbesondere zumindest ein Muster, einen Farbverlauf und/oder ein Bild, auf. Insbesondere weist die Beschichtungsstruktur zumindest im ersten Teilbereich eine Opazität von zumindest 40 %, insbesondere zumindest 70 %, vorteilhaft zumindest 90 %, vorzugsweise zumindest 95 %, auf. Insbesondere weist die Beschichtungsstruktur zumindest im zweiten Teilbereich eine Opazität von zumindest 10 %, insbesondere zumindest 30 %, vorteilhaft zumindest 50 %, vorzugsweise zumindest 70 %, und/oder von maximal 50 %, insbesondere maximal 30 %, auf.

Durch die erfindungsgemäße Ausgestaltung kann insbesondere eine hohe gestalterische Freiheit erreicht werden. Insbesondere kann durch Vertiefungen und/oder Erhöhungen in einem Bedienbereich eine verbesserte Haptik und somit ein verbesserter Komfort erreicht werden. Weiterhin kann zumindest im Vergleich zu Ausgestaltungen mit Ausnehmungen in der Beschichtungsstruktur ein Abplatzrisiko verringert werden. Durch eine Vermeidung scharfer Kanten der Beschichtungsstruktur an Rändern der Teilbereiche kann eine Ablagerung von Keimen vermindert und/oder vermieden werden.

Weiterhin wird vorgeschlagen, dass zumindest der erste Teilbereich an den zweiten Teilbereich angrenzt. Insbesondere umgibt, insbesondere umschließt, der erste Teilbereich den zweiten Teilbereich zumindest teilweise, insbesondere komplett. Es kann insbesondere eine hohe Flächenkontinuität, ein hoher Komfort und/oder ein ansprechendes Erscheinungsbild erreicht werden.

Ferner wird vorgeschlagen, dass die Beschichtungsstruktur zumindest in dem ersten Teilbereich, insbesondere auch in zumindestens 30 %, insbesondere zumindest 50 %, vorteilhaft zumindest 70 %, vorzugsweise zumindest 90 %, zumindest des zweiten Teilbereichs, eine zumindest im Wesentlichen konstante Dicke aufweist. Darunter, dass die Beschichtungsstruktur in einem Teilbereich eine "im Wesentlichen konstante" Dicke aufweist, soll insbesondere verstanden werden, dass die Beschichtungsstruktur über zumindest 90 %, insbesondere zumindest 95 %, vorzugsweise alle, der Punkte des Teilbereichs betrachtet eine Schwankung der Dicke aufweist, die kleiner ist als 20 %, insbesondere kleiner ist als 10 %, vorteilhaft kleiner ist als 5 %, vorzugsweise kleiner ist als 2 %. Es kann insbesondere eine hohe Heizeffizienz, eine sicherer Aufstellposition und/oder eine einfache Reinigung erreicht werden.

Weiterhin wird vorgeschlagen, dass die Beschichtungsstruktur zumindest in einem Teil, insbesondere in zumindest 10 %, insbesondere zumindest 30 %, vorteilhaft zumindest 50 %, besonders vorteilhaft zumindest 70 %, vorzugsweise zumindest 90 %, des zweiten Teilbereichs eine zumindest im Wesentlichen kontinuierlich abnehmende Dicke aufweist. Darunter, dass die Beschichtungsstruktur in einem Teil eines Teilbereichs eine "kontinuierlich abnehmende" Dicke aufweist, soll insbesondere verstanden werden, dass es für zumindest 50 %, insbesondere zumindest 70 %, vorteilhaft zumindest 90 %, der Punkte des Teils jeweils zumindest eine Linie gibt, die den jeweiligen Punkt schneidet, eine Länge von zumindest 0,5 mm, insbesondere zumindest 1 mm, vorteilhaft zumindest 2 mm, besonders vorteilhaft zumindest 5 mm aufweist, komplett in dem Teilbereich liegt und entlang deren Verlauf eine Dicke der Beschichtungsstruktur sich zumindest im Wesentlichen monoton, insbesondere streng monoton, verändert. Insbesondere nimmt in dem Teil des zweiten Teilbereichs eine Dicke der Beschichtungsstruktur, insbesondere ausgehend von einer Dicke der Beschichtungsstruktur im ersten Teilbereich, insbesondere bei zunehmendem Abstand zum ersten Teilbereich, ab. Insbesondere grenzt der Teil des zweiten Teilbereichs an den ersten Teilbereich an. Insbesondere weist eine Oberfläche der Beschichtungsstruktur in dem Teil im Vergleich zur Oberseite der Kochfeldplatteneinheit einen Winkel von zumindest 1 °, insbesondere zumindest 10 °, vorteilhaft zumindest 20 °, vorzugsweise zumindest 25 °, und/oder maximal 70 °, insbesondere maximal 60 °, vorteilhaft maximal 40 °, auf. Es kann insbesondere eine hohe Flächenkontinuität und/oder eine einfache Reinigung erreicht werden.

Vorteilhaft bildet zumindest der zweite Teilbereich einen Funktionsbereich, insbesondere einen Anzeige- und/oder Bedienbereich, aus. Insbesondere bildet zumindest der zweite Teilbereich einen Sensorbereich insbesondere zur Temperaturbestimmung, insbesondere per Infrarotsensor, und/oder zur Bedienereingabe, insbesondere per Touchsensor, aus. Durch die verringerte Dicke der Beschichtungsstruktur im zweiten Teilbereich im Vergleich zum ersten Teilbereich kann insbesondere bei zumindest teilweiser opaker Beschichtung eine verbesserte Sichtbarkeit von Anzeigeelementen, insbesondere Leuchtelementen, erreicht werden. Insbesondere kann in einem Bereich geringerer Dicke eine verbesserte Infrarotransparenz erreicht werden, was insbesondere zu einer besseren Messung führt. Insbesondere kann ein Schutz von Bedien- und/oder Leuchtelementen, die in einem Nachbereich der Kochfeldplatteneinheit und/oder direkt an dieser angeordnet sind, vor direkter Wärmeleitung, insbesondere von einem in dem zweiten Teilbereich platzierten, erhitzten Gargeschirr erreicht werden, wodurch insbesondere eine erhöhte Haltbarkeit erreicht werden kann.

Weiterhin wird vorgeschlagen, dass zumindest der zweite Teilbereich einen Sichtbereich zumindest teilweise, insbesondere zumindest abschnittsweise, vorzugsweise komplett, umrahmt. Unter einem "Sichtbereich" soll insbesondere ein Bereich der Oberseite verstanden werden, senkrecht bezüglich dem die Kochfeldplatteneinheit und/oder die Beschichtungsstruktur zumindest teilweise, insbesondere zu mindestens 30 %, vorteilhaft zu mindestens 60 %, vorzugsweise zu mindestens 90 %, transparent, insbesondere klar, ausgebildet ist, und/oder der zumindest im Wesentlichen frei von der Beschichtungsstruktur ist. Insbesondere ist der Sichtbereich dazu vorgesehen, einen Blick auf eine Displayeinheit, insbesondere auf ein Touchdisplay, freizugeben. Es kann insbesondere ein hoher Komfort erreicht werden. Insbesondere kann ein hohe Oberflächenkontinuität erreicht werden.

Vorteilhaft wird vorgeschlagen, dass die Beschichtungsstruktur zumindest in einem der Teilbereiche wenigstens eine Beschichtung aus einem zumindest emailartigen Material aufweist. Unter einem "emailartigen" Material soll insbesondere ein Material verstanden werden, dass zumindest in einem ausgehärteten Zustand ein glasartiges und/oder emailnes Erscheinungsbild aufweist. Insbesondere ist die Beschichtung aus geschmolzenen Glas- und/oder Keramikfritten gebildet, die auf den Teilbereich aufgebracht und zu einer einheitlichen Schicht verschmolzen wurden. Es kann insbesondere eine homogene und/oder harte Oberfläche erreicht werden. Insbesondere kann eine hohe Flexibilität in einer Farbwahl erreicht werden. Insbesondere kann ein keramischer Anschein der Platteneinheit erzeugt werden. Insbesondere kann eine hohe Gesamtsteifigkeit und/oder -flexibilität der Platteneinheit erreicht werden. Alternativ und/oder zusätzlich ist es denkbar, dass zumindest eine der Beschichtung, insbesondere zumindest die zweite Beschichtung, aus einem, vorzugsweise thermisch, insbesondere bis zu Temperaturen von 300 °C, stabilen, Polymer, insbesondere einem Harz, gebildet ist. Vorzugsweise weist die Beschichtung einen Härtegrad nach Mohs von zumindest 5, vorteilhaft zumindest 6, vorzugsweise zumindest 7, auf.

Vorteilhaft wird vorgeschlagen, dass die Beschichtungsstruktur zumindest im zweiten Teilbereich mittels Laserabtragung, insbesondere an einer von der Kochfeldplatteneinheit abgewandten Seite, bearbeitet wird. Alternativ und/oder zusätzlich wird vorgeschlagen, dass die Beschichtungsstruktur zumindest im zweiten Teilbereich mittels eines chemischen Ätzverfahrens bearbeitet wird. Insbesondere wird eine Dicke einer über den ersten und zweiten Teilbereich gemeinsam aufgetragene Beschichtung konstanter Dicke zumindest im zweiten Teilbereich durch Abtragung verringert. Alternativ oder zusätzlich ist es denkbar, dass die Beschichtungsstruktur zumindest im zweiten Teilbereich, insbesondere insgesamt, bereits bei einer Aufbringung, insbesondere in einem Druckverfahren, vorteilhaft einem tintenstrahlartigen Druckverfahren, in gezielter Dicke aufgebracht und insbesondere per Laser und/oder chemisch nachbearbeitet. Es kann insbesondere ein effizienter und/oder präziser Prozess erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen in schematischer Darstellung:
- Fig. 1: ein erstes erfindungsgemäßes Kochfeld mit einer ersten erfindungsgemäßen Kochfeldplattenvorrichtung in einer Ansicht von oben,
- Fig. 2: einen Schnitt durch die erste Kochfeldplattenvorrichtung entlang der Linie II-II in Figur 1,
- Fig. 3: ein zweites erfindungsgemäßes Kochfeld mit einer zweiten erfindungsgemäßen Kochfeldplattenvorrichtung in einer Ansicht von oben,
- Fig. 4: einen Schnitt durch die zweite Kochfeldplattenvorrichtung entlang der Linie IV-IV in Figur 3,
- Fig. 5: ein drittes erfindungsgemäßes Kochfeld mit einer dritten erfindungsgemäßen Kochfeldplattenvorrichtung in einer Ansicht von oben und
- Fig. 6: einen Schnitt durch die dritte Kochfeldplattenvorrichtung entlang der Linie VI-VI in Figur 5.

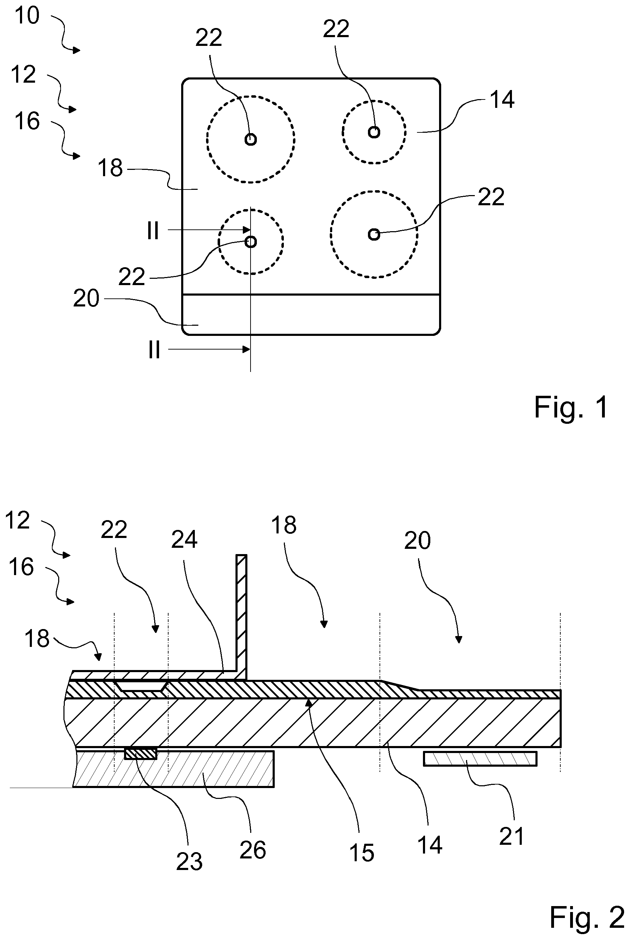

Figur 1 zeigt ein als Induktionskochfeld ausgebildetes Kochfeld 10 mit einer als Induktionskochfeldplattenvorrichtung ausgebildeten Kochfeldplattenvorrichtung 12. Die Kochfeldplattenvorrichtung 12 weist eine Kochfeldplatteneinheit 14 und eine Beschichtungsstruktur 16 auf. Die Kochfeldplatteneinheit 14 weist eine Dicke von 4 mm auf.

Die Beschichtungsstruktur 16 ist auf einer Oberseite 15 der Kochfeldplatteneinheit 14 angeordnet. Die Beschichtungsstruktur 16 weist in einem ersten Teilbereich 18 der Oberseite 15 eine höhere Dicke auf als in einem zweiten Teilbereich 20 und weiteren Teilbereichen 22 der Oberseite 15. Der erste Teilbereich 18 grenzt an den zweiten Teilbereich 20 und die weiteren Teilbereiche 22 an. Der erste Teilbereich 18 umschließt die weiteren Teilbereiche 22. Die Beschichtungsstruktur 16 weist in dem ersten Teilbereich 18 eine konstante Dicke auf. Die Beschichtungsstruktur 16 weist in an den ersten Teilbereich 18 angrenzenden Teilen des zweiten Teilbereichs 20 und der weiteren Teilbereiche 22 jeweils eine kontinuierlich abnehmende Dicke auf, wobei die Dicke mit wachsendem Abstand zum ersten Teilbereich 18 abnimmt (Figur 2). In dem Teil des zweiten Teilbereichs 20, der eine kontinuierlich abnehmende Dicke aufweist, weist die Oberfläche der Beschichtungsstruktur 16 einen Winkel zur Oberseite 15 von 10 ° auf. In Teilen der weiteren Teilbereiche 22, die eine kontinuierlich abnehmende Dicke aufweisen, weist die Oberfläche der Beschichtungsstruktur 16 einen Winkel zur Oberseite 15 von 60 ° auf. Die Beschichtungsstruktur 16 weist jeweils in Teilen des zweiten Teilbereichs 20 und der weiteren Teilbereiche 22 einen zumindest zentralen Teil mit einer konstanten Dicke auf.

Der zweite Teilbereich 20 bildet einen als Bedien- und Anzeigebereich ausgebildeten Funktionsbereich aus. Das Kochfeld 10 weist eine Bedieneinheit 21 auf, die in einem montierten Zustand in dem zweiten Teilbereich 20 unterhalb der Kochfeldplatteneinheit 14 angeordnet ist. Die Bedieneinheit 21 ist von separaten, als Touchsensoren ausgebildeten, Bedienelementen und von aus LEDs gebildeten Anzeigeelementen gebildet. Die Beschichtungsstruktur 16 ist im zweiten Teilbereich 20 dazu vorgesehen, Licht von Anzeigeelementen der Bedieneinheit 21 hindurchscheinen zu lassen. Die Beschichtungsstruktur 16 ist im zweiten Teilbereich 20 dazu vorgesehen, eine Bedienung der Bedienelemente aufgrund verbesserten Ansprechverhaltens zu verbessern.

Die weiteren Teilbereiche 22 bilden jeweils einen als Sensorbereich ausgebildeten Funktionsbereich aus. Das Kochfeld 10 weist als Infrarotsensoren ausgebildete Sensorelemente 23 auf, die dazu vorgesehen sind, durch die weiteren Teilbereiche 22 dringende, von aufgestelltem Gargeschirr 24 ausgesandte Infrarotstrahlung zu einer Temperaturbestimmung aufzunehmen. Die weiteren Teilbereiche 22 sind in Zentren von durch Heizelemente 26 definierten Heizzonen angeordnet.

Die Beschichtungsstruktur 16 ist von einer einzelnen Beschichtung aus Email gebildet.

Nach einer Auftragung der Beschichtung wird im zweiten Teilbereich 20 und den weiteren Teilbereichen 22 die Beschichtung mittels Laserabtragung bearbeitet, um eine Dicke der Beschichtung auf einen beabsichtigten Wert zu reduzieren.

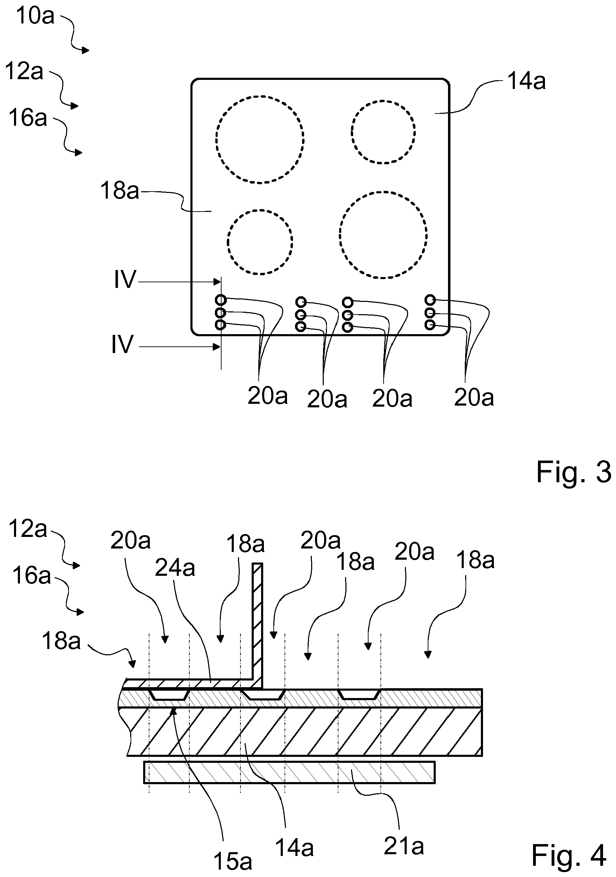

In den Figuren 3 bis 6 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 und 2, verwiesen werden kann. Zur Unterscheidung der Ausführungsbeispiele ist der Buchstabe a bzw. b an Bezugszeichen der Ausführungsbeispiele in den Figuren 3 bis 6 angefügt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 und 2, verwiesen werden.

Figur 3 und Figur 4 zeigen ein Kochfeld 10a mit einer Kochfeldplattenvorrichtung 12a, die eine Kochfeldplatteneinheit 14a und eine Beschichtungsstruktur 16a aufweist, die auf einer Oberseite 15a der Kochfeldplatteneinheit 14a angeordnet ist. Die Beschichtungsstruktur 16a weist in einem ersten Teilbereich 18a der Oberseite 15a eine höhere Dicke auf als in zweiten Teilbereichen 20a der Oberseite 15a. Die zweiten Teilbereiche 20a grenzen jeweils an den ersten Teilbereich 18a an und sind von diesem umschlossen. Ausgehend von dem ersten Teilbereich 18a nimmt eine Dicke der Beschichtungsstruktur 16a in den zweiten Teilbereichen 20a bis zu einem zentralen Bereich, in dem die Beschichtungsstruktur 16a eine konstante Dicke aufweist, ab. Ein Winkel beträgt hierbei 60 °.

Die zweiten Teilbereiche 20a bilden jeweils einen als Anzeigebereich für ein einzelnes Anzeigelement, insbesondere zur Anzeige einer Ziffer oder eines Symbol, oder für wenige mehrere Anzeigelemente oder einen als Sensorbereich für zumindest ein Sensorelement, insbesondere zur Touchsensierung, ausgebildeten Funktionsbereich, aus. Das Kochfeld 10a weist eine Bedieneinheit 21a auf, die sich über die Teilbereiche 20a erstreckt.

Wird ein erhitztes Gargeschirr 24a aus einer Heizzone heraus in eine Position über den zweiten Teilbereichen 20a bewegt, ist ein thermischer Kontakt zu den Anzeigeelementen und Sensorelementen durch ein in den zweiten Teilbereichen 20a zwischen der Beschichtungsstruktur 16a und dem Gargeschirr 24a erzeugtes Luftpolster reduziert. Weiterhin kann eine Touchfläche in einem bedienbaren Temperaturbereich gehalten werden.

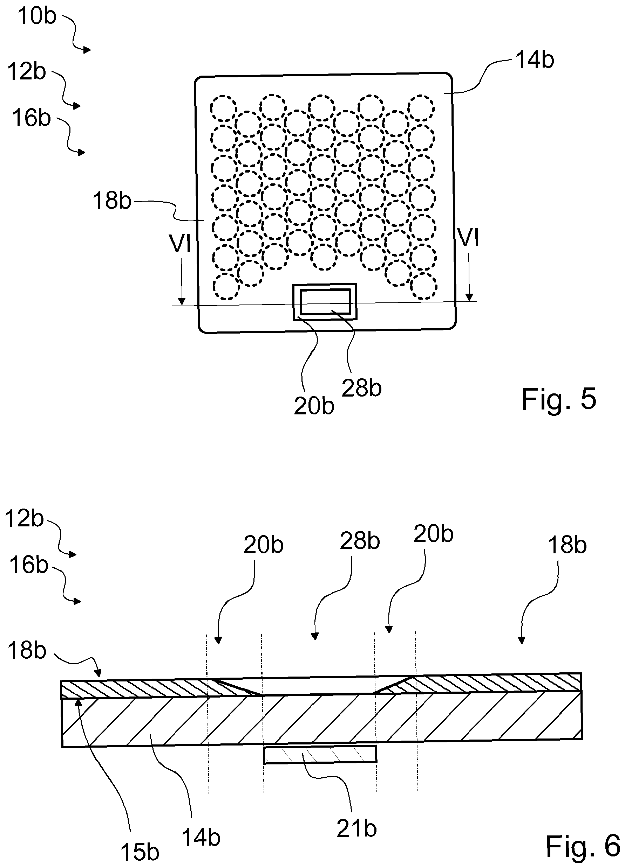

Figur 5 und Figur 6 zeigen ein als Matrixkochfeld ausgebildetes Kochfeld 10b mit einer Kochfeldplattenvorrichtung 12b, die eine Kochfeldplatteneinheit 14b und eine Beschichtungsstruktur 16b aufweist, die auf einer Oberseite 15b der Kochfeldplatteneinheit 14b angeordnet ist. Die Beschichtungsstruktur 16b weist in einem ersten Teilbereich 18b der Oberseite 15b eine höhere Dicke auf als in einem zweiten Teilbereich 20b der Oberseite 15b. Der zweiten Teilbereich 20b grenzt an den ersten Teilbereich 18b an und ist von diesem umschlossen. Ausgehend von dem ersten Teilbereich 18b nimmt eine Dicke der Beschichtungsstruktur 16b in dem zweiten Teilbereich 20b bis zu einem inneren Rand des zweiten Teilbereichs 20b kontinuierlich ab.

Der zweite Teilbereich 20b umrahmt einen Sichtbereich 28b. Das Kochfeld 10b weist eine als Touchdisplayeinheit ausgebildete Bedieneinheit 21b auf, die unterhalb der Kochfeldplatteneinheit 14b in dem Sichtbereich 28b angeordnet ist.

Die Beschichtungsstruktur 16b ist hierbei mittels eines tintenstrahlartigen Druckverfahrens in geeigneter Dicke aufgetragen, wobei auf eine Nachbehandlung mittels Laser verzichtet wird.

In weiteren Ausgestaltungen ist es denkbar, dass in einem zweiten Teilbereich eine Dicke einer Beschichtung mittels Lasereinwirkung an einer der Kochfeldplatte zugewandten Seite, durch die Kochfeldplatteneinheit hindurch zu zerstören, wobei insbesondere von einer Kante der Beschichtungstruktur ausgehend ein Kanal zu dem zweiten Teilbereich, insbesondere per Laser, eingebracht wird, der einen Abtransport von durch Laserbeschuss im zweiten Teilbereich freigesetztem Material ermöglicht.

### Bezugszeichen

- 10: Kochfeld
- 12: Kochfeldplattenvorrichtung
- 14: Kochfeldplatteneinheit
- 15: Oberseite
- 16: Beschichtungsstruktur
- 18: Teilbereich
- 20: Teilbereich
- 21: Bedieneinheit
- 22: Teilbereich
- 23: Sensorelement
- 24: Gargeschirr
- 26: Heizelement
- 28: Sichtbereich

## Patentansprüche

1. Kochfeld mit einer Kochfeldplattenvorrichtung, insbesondere einer Induktionskochfeldplattenvorrichtung, mit zumindest einer Kochfeldplatteneinheit (14; 14a; 14b), und zumindest einer Beschichtungsstruktur (16, 16a; 16b), die zumindest auf einer Oberseite (15; 15a; 15b) der Kochfeldplatteneinheit (14; 14a; 14b) angeordnet ist, **dadurch gekennzeichnet, dass** die Beschichtungsstruktur (16, 16a; 16b) in zumindest einem ersten Teilbereich (18; 18a; 18b) der Oberseite (15; 15a; 15b) eine höhere Dicke aufweist, als in zumindest einem zweiten Teilbereich (20, 22; 20a; 20b) der Oberseite (15; 15a; 15b).

2. Kochfeld nach Anspruch 1, **dadurch gekennzeichnet, dass** der erste Teilbereich (18; 18a; 18b) an den zweiten Teilbereich (20, 22; 20a; 20b) angrenzt.

3. Kochfeld nach einem der vorhergehenden Ansprüche, **dadurch gekennzeichnet, dass** die Beschichtungsstruktur (16, 16a; 16b) zumindest in dem ersten Teilbereich (18; 18a; 18b) eine zumindest im Wesentlichen konstante Dicke aufweist.

4. Kochfeld nach einem der vorhergehenden Ansprüche, **dadurch gekennzeichnet, dass** die Beschichtungsstruktur (16, 16a; 16b) zumindest in einem Teil des zweiten Teilbereichs (20, 22; 20a; 20b) eine kontinuierlich abnehmende Dicke aufweist.

5. Kochfeld nach einem der vorhergehenden Ansprüche, **dadurch gekennzeichnet, dass** der zweite Teilbereich (20, 22; 20a; 20b) einen Funktionsbereich ausbildet.

6. Kochfeld nach einem der vorhergehenden Ansprüche, **dadurch gekennzeichnet, dass** der zweite Teilbereich (20b) einen Sichtbereich (28b) zumindest teilweise umrahmt.

7. Kochfeld nach einem der vorhergehenden Ansprüche, **dadurch gekennzeichnet, dass** die Beschichtungsstruktur (16, 16a; 16b) zumindest in einem der Teilbereiche (18, 20, 22; 18a, 20a; 18b, 20b) wenigstens eine Beschichtung aus einem zumindest emailartigen Material aufweist.

8. Verfahren zur Herstellung eines Kochfelds nach einem der Ansprüche 1 bis 7.

9. Verfahren nach Anspruch 8, **dadurch gekennzeichnet, dass** die Beschichtungsstruktur (16, 16a; 16b) zumindest im zweiten Teilbereich (20, 22; 20a; 20b) mittels Laserabtragung bearbeitet wird.

## Claims

1. Hob with a hob plate apparatus, in particular an induction hob plate apparatus, with at least one hob plate unit (14; 14a; 14b), and at least one coating structure (16, 16a; 16b), which is arranged at least on an upper side (15; 15a; 15b) of the hob plate unit (14; 14a; 14b), **characterised in that** the coating structure (16, 16a; 16b) in at least a first subregion (18; 18a; 18b) of the upper side (15; 15a; 15b) has a higher thickness than in at least a second subregion (20, 22; 20a; 20b) of the upper side (15; 15a; 15b).

2. Hob according to claim 1, **characterised in that** the first subregion (18; 18a; 18b) adjoins the second subregion (20, 22; 20a; 20b).

3. Hob according to one of the preceding claims, **characterised in that** the coating structure (16, 16a; 16b) has an at least substantially constant thickness, at least in the first subregion (18; 18a; 18b).

4. Hob according to one of the preceding claims, **characterised in that** the coating structure (16, 16a; 16b) has a continually decreasing thickness, at least in a part of the second subregion (20, 22; 20a; 20b).

5. Hob according to one of the preceding claims, **characterised in that** the second subregion (20, 22; 20a; 20b) embodies a functional region.

6. Hob according to one of the preceding claims, **characterised in that** the second subregion (20b) at least partially frames a viewing region (28b).

7. Hob according to one of the preceding claims, **characterised in that** the coating structure (16, 16a; 16b) has at least one coating of an at least enamel-like material, at least in one of the subregions (18, 20, 22; 18a, 20a; 18b, 20b).

8. Method for manufacturing a hob according to one of claims 1 to 7.

9. Method according to claim 8, **characterised in that** the coating structure (16, 16a; 16b) is processed by means of laser ablation, at least in the second subregion (20, 22; 20a; 20b).

## Revendications

1. Table de cuisson comprenant un dispositif de plaque de table de cuisson, en particulier un dispositif de plaque de table de cuisson à induction, ayant au moins une unité de plaque de table de cuisson (14; 14a; 14b) et au moins une structure de revêtement (16, 16a; 16b) disposée au moins sur un côté supérieur (15; 15a; 15b) de l'unité de plaque de table de cuisson (14; 14a; 14b), **caractérisée en ce que** la structure de revêtement (16, 16a; 16b) présente, dans au moins un premier secteur partiel (18; 18a; 18b) du côté supérieur (15; 15a; 15b), une épaisseur plus grande que dans au moins un deuxième secteur partiel (20, 22; 20a; 20b) du côté supérieur (15; 15a; 15b).

2. Table de cuisson selon la revendication 1, **caractérisé en ce que** le premier secteur partiel (18; 18a; 18b) est contigu au deuxième secteur partiel (20, 22; 20a; 20b).

3. Table de cuisson selon l'une des revendications précédentes, **caractérisée en ce que** la structure de revêtement (16, 16a; 16b) présente au moins dans le premier secteur partiel (18; 18a; 18b) une épaisseur au moins essentiellement constante.

4. Table de cuisson selon l'une des revendications précédentes, **caractérisée en ce que** la structure de revêtement (16, 16a; 16b) présente au moins dans une partie du deuxième secteur partiel (20, 22; 20a; 20b) une épaisseur en diminution continue.

5. Table de cuisson selon l'une des revendications précédentes, **caractérisée en ce que** le deuxième secteur partiel (20, 22; 20a; 20b) constitue un secteur fonctionnel.

6. Table de cuisson selon l'une des revendications précédentes, **caractérisée en ce que** le deuxième secteur partiel (20b) encadre un secteur visuel (28b) du moins en partie.

7. Table de cuisson selon l'une des revendications précédentes, **caractérisée en ce que** la structure de revêtement (16, 16a; 16b) présente au moins dans un des secteurs partiels (18, 20, 22; 18a, 20a; 18b, 20b) au moins un revêtement constitué d'une matière ressemblant au moins à de l'émail.

8. Procédé de fabrication d'une table de cuisson selon l'une des revendications 1 à 7.

9. Procédé selon la revendication 8, **caractérisé en ce que** la structure de revêtement (16, 16a; 16b) est traitée, au moins dans le deuxième secteur partiel (20, 22; 20a; 20b) par enlèvement au laser.
